(19) Europäisches Patentamt
European Patent Office
Office européen des brevets

(11) EP 0 519 188 B1

(12) EUROPÄISCHE PATENTSCHRIFT

(45) Veröffentlichungstag und Bekanntmachung des Hinweises auf die Patenterteilung:
**26.03.1997 Patentblatt 1997/13**

(51) Int Cl.[6]: **C08K 5/54**, C08K 3/04, C08L 21/00

(21) Anmeldenummer: **92107270.8**

(22) Anmeldetag: **29.04.1992**

(54) **Verfahren zur Herstellung von vulkanisierbaren, mit Russ gefüllten Kunststoff- und Kautschukmischungen**

Process for producing vulcanised carbon black-filled plastics and rubber compositions

Préparation de mélanges de matières synthétiques et de caoutchouc chargés de noir de carbone

(84) Benannte Vertragsstaaten:
**AT BE CH DE DK ES FR GB GR IT LI LU NL PT SE**

(30) Priorität: **18.06.1991 DE 4119959**

(43) Veröffentlichungstag der Anmeldung:
**23.12.1992 Patentblatt 1992/52**

(73) Patentinhaber: **Degussa Aktiengesellschaft
60311 Frankturt (DE)**

(72) Erfinder:
- **Wolff, Siegfried, Dr.
W-5303 Bornheim-Merten (DE)**
- **Görl, Udo, Dr.
W-5303 Bornheim-Roisdorf (DE)**

(56) Entgegenhaltungen:
**EP-A- 0 089 162** **EP-A- 0 468 140**
**DE-A- 3 813 678** **GB-A- 2 056 995**

- **WORLD PATENTS INDEX LATEST Section Ch, Week 8125, Derwent Publications Ltd., London, GB; Class A, AN 81-45424D**

Bemerkungen:
Die Akte enthält technische Angaben, die nach dem Eingang der Anmeldung eingereicht wurden und die nicht in dieser Patentschrift enthalten sind.

EP 0 519 188 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung von vulkanisierbaren, mit Ruß gefüllten Kunststoff-und Kautschukmischungen, in die eine oder mehrere Organosiliciumverbindungen eingearbeitet werden.

Es ist schon lange bekannt, (US-PS 3,227,675, EP-PS 177674, EP-PS 0126871) oxidische Oberflächen mit Alkoxygruppen-haltigen Organosilicumverbindungen zu behandeln. Ziel all dieser Bemühungen war und ist es, einen Verbund zwischen der anorganischen Komponente, dem oxidischen Füllstoff, seien es nun z.B. Glas oder auch silikatische Füllstoffe, wie z.B. in der Gummi-Industrie (gefällte und pyrogene Kieselsäuren, Clays, Aluminiumsilikate etc.) Verwendung finden, und einem organischen Polymeren unterschiedlichster chemischer Zusammensetzung zu erzeugen.

Dies führt in der Regel zu einer Verbesserung der Vulkanisateigenschaften.

Ruße, z.B. Furnaceruße, Flammruße und Gasruße, zählen nicht zu den oxidischen Füllstoffen.

Die bei diesen Substanzen ablaufende Reaktion zwischen den Alkoxysilylgruppen und den OH-Gruppen auf der Oberfläche kann am Ruß nicht stattfinden und läßt daher den Aufbau einer chemischen Bindung zwischen Ruß und Organosiliciumverbindung als nicht möglich erscheinen.

Aus der DE-PS 2747 277 (= US-PS 4,128,438) sind zwar granulatförmige Abmischungen von Ruß und Organosiliciumverbindungen bekannt, diese werden aber nur dazu verwendet, die Organosilicumverbindung auf einem wirksameren Weg in Kieselsäure-haltige Kautschukmischungen einzuarbeiten.

In diesem Falle ist Ruß nur Träger für flüssige Organosilane, um diese in den festen Zustand zu überführen. Das Silan kann von solchen Gemischen durch Extraktion mit organischen Lösungsmitteln entfernt werden.

Nachdem man bisher immer versucht hat, die

Eigenschaften von Ruß-gefüllten Kautschukvulkanisaten über den Einsatz von Rußen unterschiedlicher Struktur und unterschiedlicher Größe der spez. Oberfläche einzustellen, stellt sich nun die Aufgabe, über den Einsatz silanmodifizierter Ruße die Vulkanisateigenschaften zu verbessern.

In der deutschen Patentanmeldung P 4023537 wird beschrieben, daß sich bei geeigneter Vorgehensweise nicht unerhebliche Mengen an Organosiliciumverbindungen, abhängig von der Oberfläche und der Struktur des Rußes, aber auch von der Art der Verbindungen, auf dem Ruß binden lassen.

Die DE-A1-38 13 678 betrifft Kautschukmischungen für Reifen, die neben Organosiliciumverbindungen Ruß als Füllstoff enthalten. Um die Reaktivität des Rußes zu erhöhen, muß er vor der Verwendung nach oxidiert werden, so daß er einen pH-Wert von 3 bis 5,5 aufweist.

Gegenstand der Erfindung ist ein Verfahren zur Herstellung mit Schwefel sowie Vulkanisationsbeschleunigern vulkanisierbarer, rußgefüllter Kunststoff- und Kautschukmischungen, bei dem man in die Mischungen soviel einer oder mehrerer Organosiliciumverbindung(en) der allgemeinen Formeln

$$\left[R^1_n-(RO)_{3-n}\ Si-(Alk)_m\right]_q\left[B\right] \qquad (I),$$

oder

$$R^1_n\,(RO)_{3-n}\,Si\text{-}R^2 \qquad (II)$$

in denen bedeuten

B: -SCN, -SH, -Cl, $-NH_2$ (wenn q = 1) oder -Sx- (wenn q = 2)

R und $R^1$: eine Alkylgruppe mit 1 bis 4 Kohlenstoffatomen, den Phenylrest, wobei alle Reste R und $R^1$ jeweils die gleiche oder eine verschiedene Bedeutung haben können,

n: 0; oder 2,

Alk: einen zweiwertigen geraden oder verzweigten Kohlenwasserstoffrest mit 1 bis 6 Kohlenstoffatomen,

m: 1

x: eine Zahl von 2 bis 8,

$R^2$: einen einwertigen geraden oder verzweigten ungesättigten Kohlenwaserstoffrest mit 2 bis 20 Kohlenstoffatomen, bevorzugt 2 bis 6 Kohlenstoffatomen,

einarbeitet, daß deren Menge derjenigen entspricht, die man bei der Umsetzung von Ruß und der jeweiligen Organosiliciumverbindung als nicht mehr mit einem organischen Lösungsmittel extrahierbar ermittelt.

Das entsprechende Verfahren zur Bestimmung dieser Menge ist in der deutschen Patentanmeldung P 40 23 537 beschrieben.

Im allgemeinen handelt es sich dabei um 0,1 bis 30 Gew.-Teile einer oder mehrerer Organosiliciumverbindungen. insbesondere 0,5 bis 15 Gew.-Teile, bevorzugt 0,5 bis 4 Gew.-Teile, bezogen auf 100 Gew.-Teile Ruß.
Es hat sich gezeigt, daß die auf dem jeweiligen Ruß maximal bindbare und damit nicht mehr durch organische Lösungsmittel, insbesondere Diethylether extrahierbare Menge an Organosiliciumverbindung(en) auch das in Abhängigkeit von Ruß und Organosilicumverbindung erzielbare Optimum an gummitechnischer Leistung zur Folge hat.
Darüber hinausgehende extrahierbare Mengen dieser Verbindung(en) führen nicht nur zu keiner weiteren Verbesserung der Vulkanisateigenschaften, sondern im Gegenteil zu einer Verschlechterung des gummitechnischen Eigenschaftsbildes.

Als Ruße werden die in der Kautschuktechnologie bekannten Typen eingesetzt:

| | |
|---|---|
| N115 | N326 |
| N234 | N550 |
| N220 | N660 |
| N375 | N683 |
| N330 | N765 |

Furnaceruße (Einteilung nach ASTM D 1765).

Diese Ruße werden den Kunststoff- bzw. Kautschukmischungen in Mengen von 5 bis 250 Teilen, bevorzugt 50 bis 100 Teilen, bezogen auf 100 Teile Kautschuk bzw. Kunststoff zugesetzt.

Die optimalen Mengen der Organosilane kann man auch dadurch bestimmen, daß man im Rahmen einer Konzentrationsreihe das gummitechnische Verhalten der Vulkanisate prüft und auf diesem Wege das geeignetste Verhältnis Ruß/Organosiliciumverbindung herausfindet.

Die Umrechnung der exakt definierten, für die Erzielung eines optimalen Wertebildes notwendigen Konzentration von einem Organosilan auf ein anderes läßt sich anschließend durch die äquimolaren Bezüge z.B. auf die Trialkoxysilylgruppen ermitteln, wenn man, wie in den Beispielen geschehen, Bis-(triethoxysilylpropyl)tetrasulfan (TESPT) zur Modifizierung des Rußes einsetzt.

Während bei silikatischen Füllstoffen in fast allen Fällen die Modifizierung mit einem Organosilan während des Einmischen vorgenommen wird, konnte dieses Vorgehen nicht ohne weiteres als geeignet für Ruße angesehen werden, da die Geschwindigkeit der Reaktion zwischen Ruß und Organosilan nicht vorhersehbar war.

Dabei zeigt sich, daß im allgemeinen die Zahl der hydrolisierbaren Gruppen -(OR) äquivalent zur Konzentration der auf der Rußoberfläche vorhandenen sauerstoffhaltigen Gruppen (inmval) gefunden wird.

Dies ist angesichts der Vielgestaltigkeit der sauerstoffhaltigen Gruppen auf der Rußoberfläche überraschend.

Literatur: H.P. Boehm, Voll, Carbon 9 (1971) 481 f, J.P. Bonnet et al., Rubber Conf. Proc. Sydney, 1988, Vol. 1, S. 113 f)

Es bietet sich hier eine weitere Möglichkeit, die optimale Menge des einzusetzenden Organosilans zu ermitteln.

Es ergeben sich somit drei verschiedene Verfahren, mit deren Hilfe man die bindbare und optimale Menge der Organosiliciumverbindungen, natürlich im Rahmen der diesen Verfahren anhaftenden Fehlergrenzen, ermitteln kann.
Zu den geeigneten Kautschukarten zählen mit Schwefel sowie Vulkanisationsbeschleuniger(n) zu Elastomeren vernetzbare Kautschuke, Kunstoffe und deren Gemische. Hierzu zählen die sogenannten Dienelastomere, also beispielsweise ölgestreckte natürliche und synthetische Kautschuke wie Naturkautschuke, Terpolymere aus Ethylen, Propylen und nichtkonjugierte Diene. Darüberhinaus Copolymere aus Ethylen und Propylen sowie Carboxylkautschuke, Epoxykautschuke, Transpolypentenamer, halogenierte Butylkautschuke, Kautschuke aus 2-Chlorbutadien, Ethylvinylacetat-Copolymere, gegebenenfalls auch chemische Derivate des Naturkautschuks sowie modifizierte Naturkautschuke.
In den erfindungsgemäß hergestellten Mischungen sind weitere in der Kautschukindustrie übliche Komponenten enthalten, wie z. B.

- Übliche in der Kautschukindustrie verwendete Vulkanisationsbeschleuniger (z.B. Sulfenamide, 2-Mercaptobenzthiazol (MBT), Di-2-benzothiazyldisulfid (MBTS, Triazinbeschleuniger, Thiurame) alleine oder im Gemisch in Mengen von 0,1 bis 10 GT, bezogen auf 100 GT Kautschuk.

- Vulkanisationsverzögerer wie z.B. Vulkalent E, Di-(phenylthio)acetamid (PVI), ebenfalls in Mengen von 0,1 bis 10 GT, bezogen auf 100 GT Kautschuk.

- Zinkoxid und Stearinsäure als Promotoren der Vulkanisation in Mengen von 0.5 bis 10 GT, bezogen auf 100 GT Kautschuk.

- In der Kautschukindustrie verwendete Alterungs-, Ozon-, Ermüdungsmittel wie z.B. N-Isopropyl-N'-phenyl-p-phenylendiamin (IPPD), Poly-2,2,4-trimethyl-1,2-dehydrochinolin (TMQ) sowie auch Wachse als Lichtschutzmittel und deren Verschnitte.

- Beliebige Weichmacher wie z.B. aromatische, naphthenische, paraffinische, synthetische Weichmacher und deren Verschnitte.

- Gegebenenfalls Schwefel in einer Menge von 0,1 bis 10 GT je 100 GT Kautschuk.

- Gegebenenfalls Farbstoffe und Verarbeitungshilfsmittel in der üblichen Dosierung.

Die Mischungsherstellung erfolgt in der in der Gummiindustrie bekannten Art und Weise z.B. in einem Innenmischer oder auf einem Walzwerk. Dabei sind Mischtemperaturen von bis zu 250 °C anwendbar.

Im Vergleich zu den bekannten Mischungen führt das erfindungsgemäße Verfahren, bei dem Ruß und Organosilan bevorzugt gleichzeitig eingetragen werden in den aus den Kautschuk- und Kunststoffmischungen hergestellten Vulkanisaten zu einer deutlichen Verbesserung der Moduli, der Elastizität der dynamischen Eigenschaften und des Verlustwinkels tan δ.

Der Anwendungsbereich des erfindungsgemäßen Verfahrens erstreckt sich auf Mischungen, wie sie üblicherweise im Reifenbau, z.B. im Gürtel-, Karkass- und Wulstringbereich, in Seitenwand- und Haftmischungen eingesetzt werden, sowie auf technische Artikel wie z.B. Fördergurte, Keilriemen, Schläuche, Dichtungen, Motorlager, Feder- und Dämpfungselemente und gummibeschichtete Gewebe.

Prüfnormen für die Anwendung:

| | Prüfmethode |
|---|---|
| Rheometer | DIN 53 529 |
| Mooney-Prüfung | DIN 53 524 |
| Zugfestigkeit | DIN 53 504 |
| Bruchdehnung | DIN 53 507 |
| Modul 100 %, 200 %, 300 % | DIN 53 507 |
| Firestone Ball-Rebound | AD 20 245 |
| Shore-A-Härte | DIN 53 505 |
| Goodrich-Flexometer | ASTM D 623-62 |
| Heat build-up | DIN 53 513 |
| MTS | DIN 53 513 |

BEISPIEL I zeigt die Menge an bindbarem Silan, wie sie für die einzelnen Degussa-Ruße gefunden werden. Deutlich wird hierbei der Einfluß der BET-Oberfläche auf die Höhe der bindbaren Si 69-Menge.

## SILAN-MODIFIZIERTE RUSSE

| | *BET* | *DBP* | *opt. Menge an Si 69 in GT auf 100 GT Ruß* |
|---|---|---|---|
| N 115 / Si 69 | 145 | 114 | 3.3 |
| N 234 / Si 69 | 125 | 125 | 2.2 |
| N 220 / Si 69 | 115 | 114 | 2.1 |
| N 375 / Si 69 | 96 | 114 | 1.9 |
| N 330 / Si 69 | 82 | 102 | 1.8 |
| N 326 / Si 69 | 83 | 72 | 1.8 |
| N 550 / Si 69 | 42 | 121 | 1.5 |
| N 660 / Si 69 | 35 | 90 | 1.2 |
| N 683 / Si 69 | 37 | 133 | 1.0 |
| N 765 / Si 69 | 35 | 122 | 0.8 |

BEISPIEL II : Vergleich zwischen N 234 und N 234 mit in situ-Zugabe von Si 69 in einer PKW-Laufflächenmischung

| | | 1 | 2 |
|---|---|---|---|
| SBR 1500 | | 50 | 50 |
| SBR 1712 | | 68,75 | 68,75 |
| CORAX N 234 | | 60 | 60 |
| Si 69 | | - | 1,5 |
| ZnO RS | | 3 | 3 |
| Stearinsäure | | 2 | 2 |
| Vulkanox 4010 NA | | 1,5 | 1,5 |
| Protector G 35 | | 1 | 1 |
| Vulkacit CZ | | 1,6 | 1,6 |
| Schwefel | | 1,8 | 1,8 |
| Rheometer: 165°C | | | |
| $D_{max} - D_{min}$ | (Nm) | 7,81 | 8,69 |
| Reversion | (%) | 9,8 | 5,8 |
| Vulkanisatdaten: 165°C, $t_{95}$ * | | | |
| Zugfestigkeit | (MPa) | 20,7 | 22,2 |
| Modul 300 % | (MPa) | 10,3 | 11,8 |
| Firestone Ball Rebound | (%) | 34,0 | 34,8 |
| Shore-A-Härte | | 68 | 71 |

<u>Goodrich-Flexometer:</u> (RT, 108 N, 0,175 inch, 18 h)

| | | | 1 | 2 |
|---|---|---|---|---|
| delta T Center | (°C ) | | 149,5 | 144,9 |
| Dyn. Compression | ( % ) | | 25,5 | 22,8 |

<u>M T S - Prüfung</u>

| | | | | |
|---|---|---|---|---|
| Dyn. Dehnmodul | (MPa) | 0°C | 38,8 | 42,6 |
| | | 60°C | 11,7 | 13,0 |
| Verlustwinkel tan δ | | 0°C | 0,317 | 0,300 |
| | | 60°C | 0,224 | 0,209 |

Die Zugabe von Si 69 zur Rußmischung führt zu einer Erhöhung der Vernetzungsausbeute, des Moduls, der Zugfestigkeit, der Elastizität und der Shore-Härte.

Bei den Flexometerdaten zeigt delta T Center einen verminderten Hitzeaufbau und eine geringere dynamische Compression.

Der geringere Verlustwinkel tan δ bei 60 °C deutet auf einen niedrigeren Rollwiderstand der silanbehandelten Mischung hin.

BEISPIEL III: Vergleich zwischen N 110 und N 110 mit in situ-Zugabe von Si 69 in einer LKW-Laufflächenmischung

| | | 1 | 2 |
|---|---|---|---|
| RSS 1 (ML (1+4) = 70-80 | | 100 | 100 |
| CORAX N 110 | | 45 | 45 |
| Si 69 | | - | 1,5 |
| ZnO RS | | 4 | 4 |
| Stearinsäure | | 3 | 3 |
| Protector G 35 | | 1,5 | 1,5 |
| Vulkanox 4010 NA | | 2 | 2 |
| Vulkacit HS | | 1 | 1 |
| Naftolen ZD | | 5 | 5 |
| Vulkacit MOZ | | 1,18 | 1,18 |
| Schwefel | | 1,07 | 1,07 |
| Rheometer: 145°C | | | |
| $D_{max} - D_{min}$ | (Nm ) | 6,97 | 7,71 |
| $D_{min}$ | (Nm ) | 1,08 | 0,91 |
| Mooney-Viskosität | | | |
| ML (1+4) (100°C) | (ME ) | 75 | 69 |

Vulkanisatdaten: 145°C, $t_{95}$ %

| | | | 1 | 2 |
|---|---|---|---|---|
| Zugfestigkeit | (MPa) | | 25,7 | 25,9 |
| Modul 300 % | (MPa) | | 7,5 | 8,8 |
| Firestone Ball Rebound | ( % ) | | 42,2 | 47,4 |
| Shore-A-Härte | | | 62 | 64 |

Goodrich-Flexometer: (RT, 108 N, 0,175 inch, 18 h)

| | | | | |
|---|---|---|---|---|
| delta T Center | (°C ) | | 95,1 | 87,4 |
| Dyn. Compression | ( % ) | | 25,0 | 21,2 |

M T S - Prüfung

| | | | | |
|---|---|---|---|---|
| Dyn. Dehnmodul | (MPa) | 0°C | 11,9 | 12,8 |
| | | 60°C | 7,5 | 8,0 |
| Verlustwinkel tan δ | | 0°C | 0,254 | 0,242 |
| | | 60°C | 0,138 | 0,125 |

| BEISPIEL IV: Abhängigkeit der optimalen gummitechnischen Leistung von der auf den Ruß aufgebrachten Silanmenge.<br>High Performance PKW-Lauffläche mit N 234 als Ruß und Bis(triethoxysilylpropyl)tetrasulfan als Silan. | |
|---|---|
| Rezeptur: | |
| Buna 1712 | 55 |
| Buna 1721 | 55 |
| Buna CB 30 | 30 |
| N 234 | 90 |
| Si 69 | 0 - 3,5 |
| ZnO RS | 3 |

(fortgesetzt)

| BEISPIEL IV: Abhängigkeit der optimalen gummitechnischen Leistung von der auf den Ruß aufgebrachten Silanmenge. High Performance PKW-Lauffläche mit N 234 als Ruß und Bis(triethoxysilylpropyl)tetrasulfan als Silan. | |
|---|---|
| Rezeptur: | |
| Stearinsäure | 1,5 |
| Naftolen ZD | 12 |
| Vulkanox 4010 NA | 2,5 |
| Protector G 35 | 1,5 |
| Vulkacit NZ | 2,6 |
| Schwefel | 1,6 |

Das vorliegende Beispiel zeigt, daß der Verlustwinkel tan δ bei 60 °C, ein Parameter für den Rollwiderstand, mit zunehmender Si 69-Konzentration abnimmt und ab einer Menge von 2 Tln. Si 69 auf 90 Tle. N 234 sich dann wieder verschlechtert. Gleiches gilt für den Heat build-up und für den Ball-Rebound. (Abb. 1 bis 3 )

**Patentansprüche**

**1.** Verfahren zur Herstellung mit Schwefel sowie Vulkanisationsbeschleunigern vulkanisierbarer; rußgefüllter Kunststoff- und Kautschumischungen, bei dem man in die Mischung soviel einer oder mehrerer Organosiliciumverbindungen der allgemeinen Formeln

$$\left[R^1{}_n\text{-}(RO)_{3-n}\,Si\text{-}(Alk)_m\right]_q\left[B\right] \quad (I),$$

oder

$$R^1{}_n\,(RO)_{3-n}\,Si\text{-}R^2 \qquad (II),$$

in denen bedeuten

B: -SCN. -SH. -Cl, $-NH_2$ (wenn q = 1) oder -Sx- (wenn q = 2)
R und $R^1$: eine Alkylgruppe mit 1 bis 4 Kohlenstoffatomen, den Phenylrest, wobei alle Reste R und $R^1$ jeweils die gleiche oder eine verschiedene Bedeutung haben können,
n: 0; 1 oder 2,
Alk: einen zweiwertigen geraden oder verzweigten Kohlenwasserstoffrest mit 1 bis 6 Kohlenstoffatomen,
m: 1
x: eine Zahl von 2 bis 8,
$R^2$: einen einwertigen geraden oder verzweigten ungesättigten Kohlenwaserstoffrest mit 2 bis 20 Kohlenstoffatomen, bevorzugt 2 bis 8 Kohlenstoffatomen,

einarbeitet, daß deren Menge derjenigen entspricht, die man bei der Umsetzung von Ruß und der jeweiligen Organosiliciumverbindung als nicht mehr mit einem organischen Lösungsmittel extrahierbar ermittelt, dadurch gekennzeichnet, daß es sich um die Ruße handelt:

N 115
N 234
N 220

(continued)

N 375
N 330
N 326
N 550
N 660
N 683
N 765

## Claims

1. A process for the production of plastics mixtures and rubber mixtures vulcanisable with sulphur and vulcanisation accelerators and filled with carbon black, wherein as much of one or more organosilicon compounds corresponding to the following general formulae:

$$\left[ R^1{}_n - (RO)_{3-n}\, Si-(Alk)_m \right]_q \left[ B \right] \qquad (I),$$

or

$$R^1{}_n - (RO)_{3-n}\, Si - R^2 \qquad (II),$$

wherein

| | |
|---|---|
| B | signifies -SCN, -SH, -Cl, $-NH_2$ (where q = 1) or $-S_x-$ (where q = 2) |
| R and $R^1$ | signify an alkyl group having 1 to 4 carbon atoms, or the phenyl group, and all the groups R and $R^1$ may in each case have the same or a different meaning, |
| n | is 0, 1 or 2, |
| Alk | signifies a divalent linear or branched hydrocarbon group having 1 to 6 carbon atoms, |
| m | is 1, |
| x | is a number from 2 to 8, |
| $R^2$ | signifies a monovalent linear or branched unsaturated hydrocarbon group having 2 to 20 carbon atoms, preferably from 2 to 8 carbon atoms, |

is incorporated into the mixture as corresponds to that quantity which, on the reaction of carbon black and the respective organosilicon compound, is determined as being no longer extractable with an organic solvent, characterised in that the carbon blacks are:

N 115
N 234
N 220
N 375
N 330
N 326
N 550
N 660
N 683
N 765

## Revendications

1. Procédé de production de mélanges de caoutchouc et de matières plastiques chargés à la suie, vulcanisables avec du soufre et des accélérateurs de vulcanisation, dans lequel on introduit suffisamment d'un ou plusieurs composés d'organosilicium de formules générales suivantes :

$$[R^1{}_n - (RO)_{3-n}\ Si - (Alk)_m]_q\ [B] \qquad (I)$$

ou

$$R^1{}_n\ (RO)_{3-n}\ Si - R^2 \qquad (II)$$

dans lesquelles :

| | |
|---|---|
| B | représente les groupes -SCN, -SH, -Cl, $-NH_2$ (si q est égal à 1) ou -Sx- (si q est égal à 2), |
| R et $R^1$ | représentent un groupe alkyle ayant 1 à 4 atomes de carbone, le radical phényle, tous les radicaux R et $R^1$ pouvant avoir une signification identique ou différente, |
| n | est égal à 0, 1 ou 2, |
| -Alk | représente un radical hydrocarbure bivalent droit ou ramifié ayant 1 à 6 atomes de carbone, |
| m | est égal à 1, |
| x | est un nombre égal à 2 à 8, et |
| $R^2$ | représente un radical hydrocarbure monovalent insaturé droit ou ramifié ayant 2 à 20 atomes de carbone, de préférence 2 à 6 atomes de carbone, |

pour que leur quantité corresponde à celles que l'on détermine comme n'étant plus extractibles par un solvant organique lors de la réaction entre la suie et le composé d'organosilicium respectif, caractérisé en ce qu'il s'agit des suies suivantes :

| | |
|---|---|
| N115 | N326 |
| N234 | N550 |
| N220 | N660 |
| N375 | N683 |
| N330 | N765. |

Abb. 1

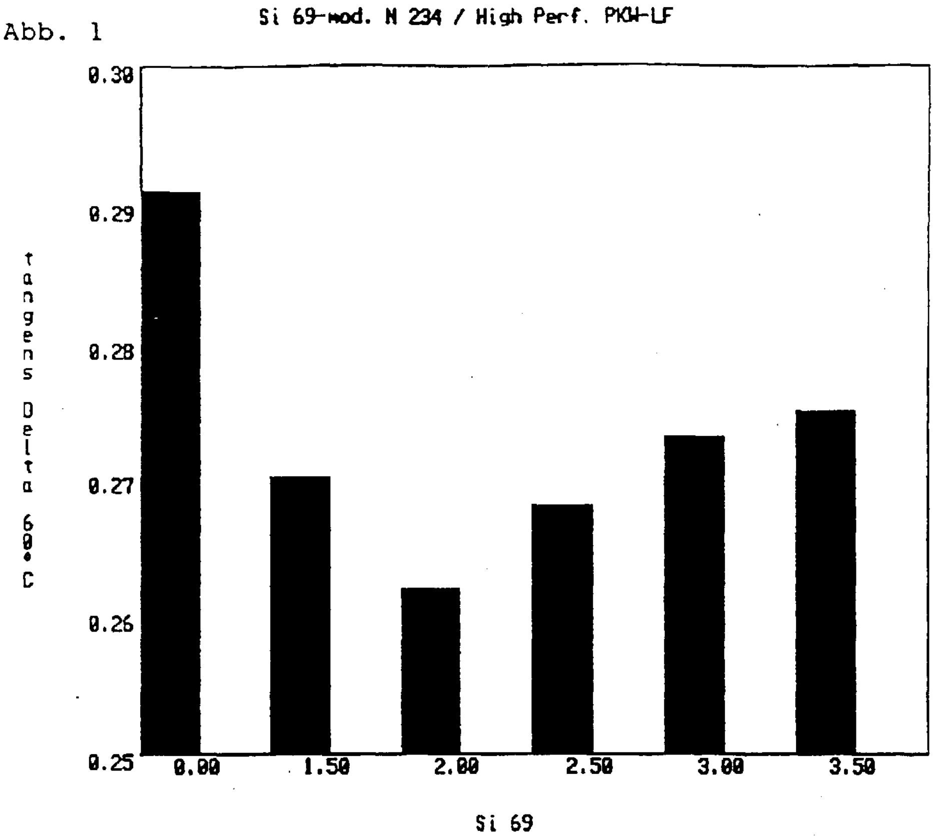
Si 69-mod. N 234 / High Perf. PKW-LF
tangens Delta 60°C
0.30
0.29
0.28
0.27
0.26
0.25
0.00
1.50
2.00
2.50
3.00
3.50
Si 69

Abb. 2

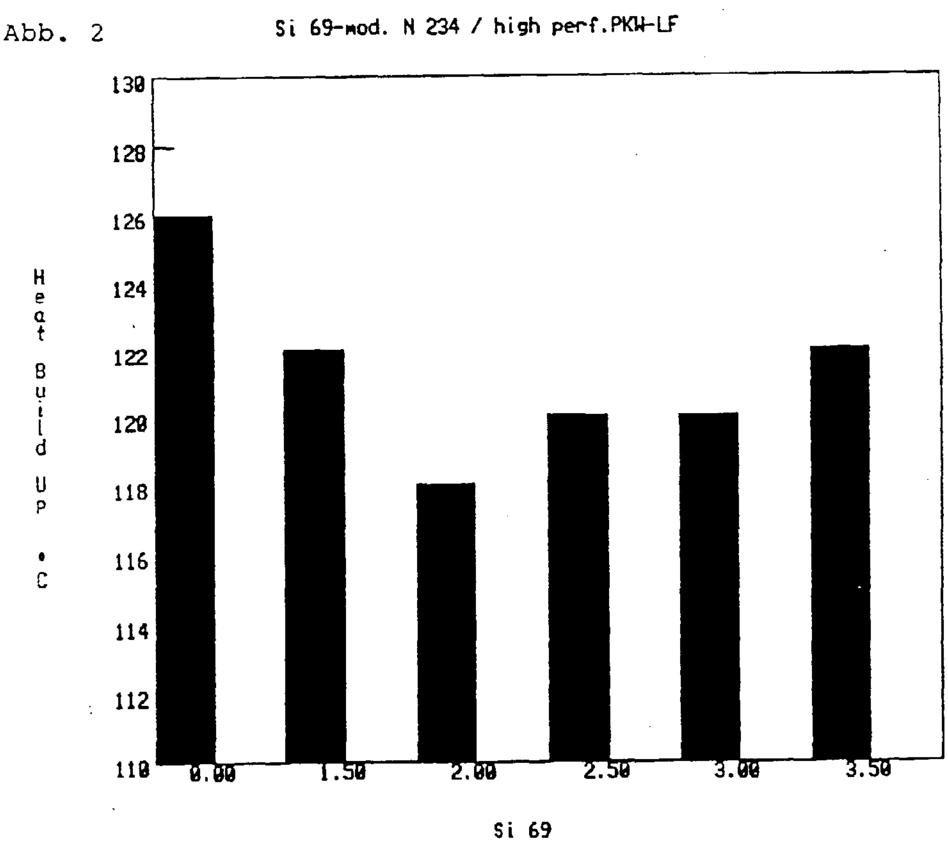
Si 69-mod. N 234 / high perf.PKW-LF
Heat Build Up °C
130
128
126
124
122
120
118
116
114
112
110
0.00
1.50
2.00
2.50
3.00
3.50
Si 69

Abb. 3

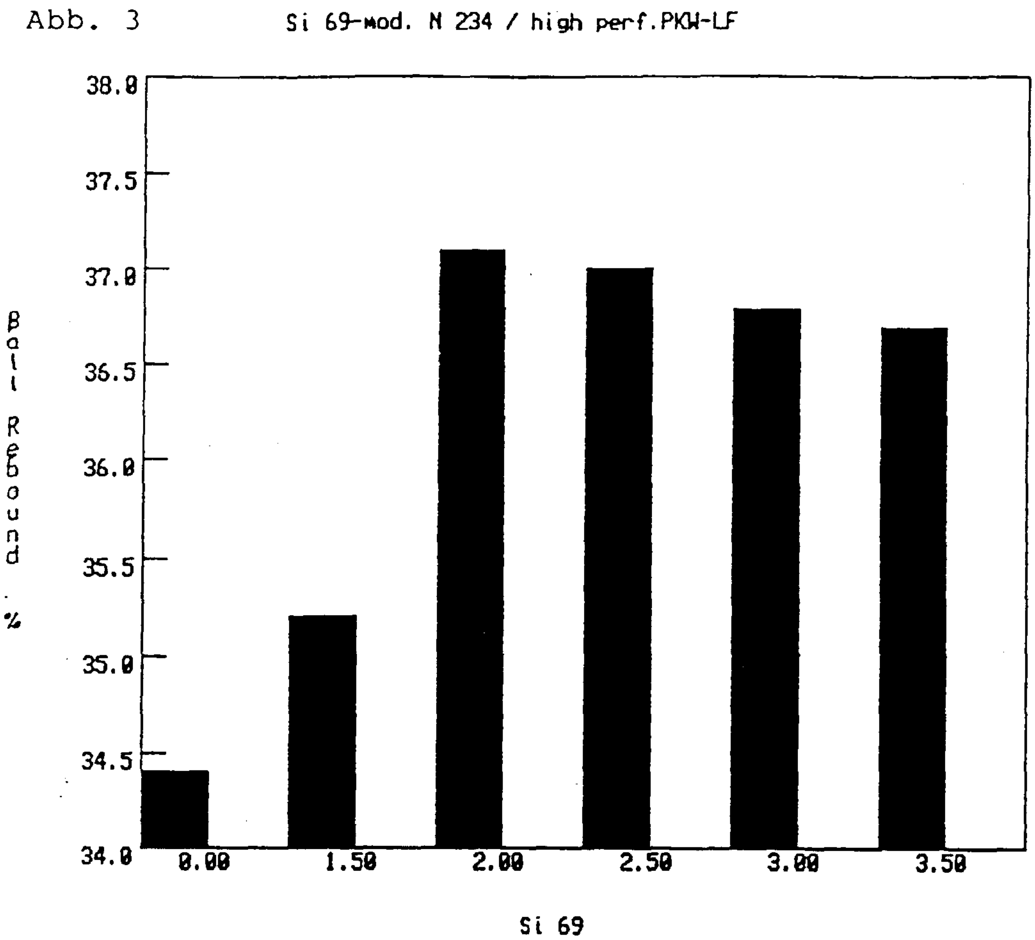
Si 69-mod. N 234 / high perf.PKW-LF
Ball Rebound %
38.0
37.5
37.0
36.5
36.0
35.5
35.0
34.5
34.0
0.00
1.50
2.00
2.50
3.00
3.50
Si 69